# FASCICULE DE BREVET EUROPEEN

(11) **EP 3 800 374 B1**
(45) Date de publication et mention de la délivrance du brevet: **29.11.2023**
(21) Numéro de dépôt: 20199537.0
(22) Date de dépôt: 01.10.2020
(51) Int. Cl.: F16H 55/14, F16H 55/12, B61C 9/38

(54) **ROUE DENTÉE ADAPTÉE À ÊTRE FIXÉE À UN ESSIEU DE VÉHICULE, NOTAMMENT FERROVIAIRE**
ZAHNRAD, DAS ZUR BEFESTIGUNG AN EINER FAHRZEUGACHSE, INSBESONDERE EINES SCHIENENFAHRZEUGS, GEEIGNET IST
TOOTHED WHEEL ADAPTED TO BE FIXED TO AN AXLE OF A VEHICLE, IN PARTICULAR A RAILWAY VEHICLE

(30) Priorité: 04.10.2019 FR 1910989
(43) Date de publication de la demande: 07.04.2021
(73) Titulaire: ALSTOM Holdings, 93400 Saint-Ouen-sur-Seine (FR)
(72) Inventeur: FRACES, Mathieu, 71100 CHALON SUR SAONE (FR); GUERDER, Jean-Yves, 84300 CAVAILLON (FR)
(74) Mandataire: Lavoix

(56) Documents cités:
- WO-A1-2011/095620
- DE-C- 480 092
- GB-A- 250 801
- US-A- 403 101
- US-A- 2 230 902
- US-A1- 2016 229 009

## Description

La présente invention concerne une roue dentée adaptée à être fixée à un essieu de véhicule, notamment ferroviaire, à un dispositif d'entraînement pour véhicule ferroviaire et à un véhicule, notamment ferroviaire, associés.

L'invention se situe dans le domaine des roues dentées, en particulier pour véhicules ferroviaires et des dispositifs d'entraînement ou engrenages incorporant de telles roues dentées.

Dans le domaine des véhicules ferroviaires, des roues dentées de taille importante sont utilisées, en particulier dans des dispositifs d'entraînement également appelés réducteurs. En fonctionnement, ces roues sont soumises à des fortes vibrations, ce qui génère un bruit important.

Le document US 2016/229009 A1 divulgue une roue dentée.

Un des objectifs de l'invention est de réduire le bruit de fonctionnement des dispositifs d'entraînement de véhicule ferroviaire de type réducteur.

A cet effet, l'invention propose une roue dentée conforme à la revendication 1.

La roue dentée pour véhicule ferroviaire selon l'invention peut présenter une ou plusieurs des caractéristiques ci-dessous, prises indépendamment ou dans toutes leurs combinaisons techniquement acceptables.

Le matériau granulaire est du sable.

Le premier matériau est un alliage d'acier spécial ayant des propriétés de robustesse renforcées, et le deuxième matériau est de l'acier ordinaire.

Le premier matériau est un alliage d'acier spécial comportant du nickel, du chrome et du molybdène.

La couronne dentée est soudée ou vissée sur ladite jante.

Selon un autre aspect, l'invention propose un dispositif d'entraînement pour véhicule ferroviaire comportant un essieu et au moins une roue dentée fixée audit essieu, dans lequel ladite roue dentée est du type brièvement décrit ci-dessus.

Le moyeu de la roue dentée est fixé par frettage à l'essieu, les disques étant soudés sur le moyeu, et la couronne dentée est soudée sur ladite jante.

Les disques formant la jante de roue dentée sont fixés par vissage au moyeu.

Selon un autre aspect, l'invention propose un véhicule ferroviaire comportant au moins un dispositif d'entraînement tel que brièvement décrit ci-dessus.

D'autres caractéristiques et avantages de l'invention ressortiront de la description qui en est donnée ci-dessous, à titre indicatif et nullement limitatif, en référence à la figure annexée :
[Fig 1] la figure 1 illustre schématiquement un premier mode de réalisation d'un dispositif d'entraînement comportant une roue dentée selon l'invention ;
[Fig 2] la figure 2 illustre schématiquement un deuxième mode de réalisation d'un dispositif d'entraînement comportant une roue dentée selon l'invention.

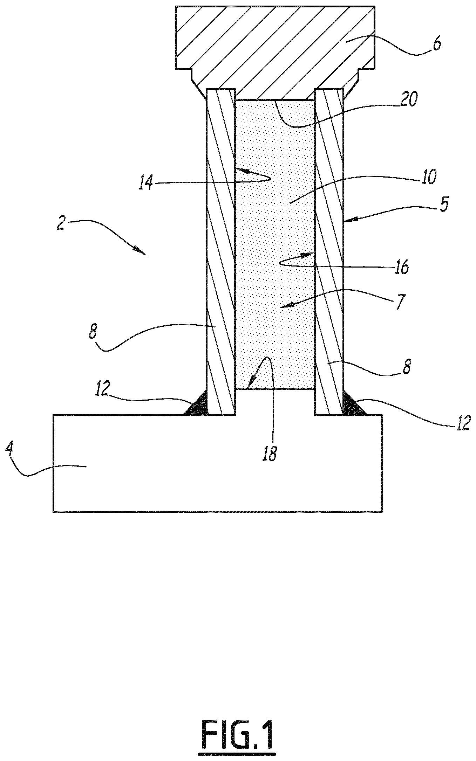

La figure 1 illustre schématiquement un premier mode de réalisation d'une roue dentée 2, adaptée à être incorporée dans un dispositif d'entraînement pour véhicule, notamment ferroviaire (non représenté). Le dispositif d'entraînement est partiellement représenté. Il s'agit par exemple d'une boîte de vitesse (ou réducteur) pour véhicule ferroviaire. En variante, ill s'agit par exemple d'une boîte de vitesse (ou réducteur) pour bus ou car.

La roue dentée 2 comporte un moyeu 4, une couronne dentée 6 et deux disques 8 (demi-disques vus de profil dans la figure). Les disques 8 sont de forme et de taille identiques, et sont montés en vis-à-vis symétrique, et forment une jante 5 sur laquelle est fixée la couronne dentée 6.

Les disques 8 sont respectivement soudés au moyeu 4, le soudage étant par exemple réalisé par faisceau d'électrons. Des collerettes 12 permettent en outre de renforcer la fixation des disques 8 au moyeu 4.

La couronne dentée 6 est par exemple soudée sur la jante 5.

Les disques 8, en relation avec le moyeu 4 et la couronne dentée 6, forment une cavité intérieure 7 continue, ou, en d'autres termes, qui ne comporte pas de paroi intérieure. La cavité intérieure 7 est comprise entre les parois 14, 16, 18 et 20 formées par les éléments de la roue qui sont les disques 8, le moyeu 4 et la couronne dentée 6.

La cavité 7 est avantageusement remplie entièrement d'un matériau granulaire 10, de manière à ce que le matériau granulaire 10 soit en contact avec chacune des parois 14, 16, 18, 20 de la cavité intérieure.

Le matériau granulaire a une fonction d'absorption d'énergie, permettant un amortissement des modes de vibration des disques 8 lorsque la roue dentée 2 est en roulement.

Les modes de vibration des disques ont des fréquences de vibration associées. Les modes de vibration et fréquences de vibration associées varient en fonction de la taille des disques, du matériau dans lequel ils sont fabriqués et de conditions d'utilisation, par exemple de la vitesse de roulement du véhicule ferroviaire.

Avantageusement, le matériau granulaire 10 est choisi en fonction de sa capacité à générer de la friction entre les grains. Avantageusement, le matériau granulaire permet ainsi de dissiper de l'énergie quelle que soit la fréquence de vibration à amortir.

Par exemple, le matériau 10 est un granulat, de préférence du sable.

Dans le mode de réalisation de la figure 1, la roue dentée 2 est adaptée à être fixée sur un essieu du véhicule ferroviaire, au moyen du moyeu 4. Par exemple, le moyeu 4 est fixé par frettage à l'essieu.

De préférence, la couronne dentée est réalisée en un premier matériau, qui présente des propriétés de dureté et de robustesse renforcées, et les disques sont réalisés dans un deuxième matériau.

De préférence, le premier matériau est un alliage d'acier spécial, utilisé pour des engrenages, par exemple un alliage de manganèse et de chrome. En variante, le premier matériau est un autre alliage de la famille des alliages spéciaux résistants à l'abrasion.

De préférence, le deuxième matériau est de l'acier ordinaire.

Avantageusement, le coût global de fabrication d'une roue dentée 2 est réduit, le premier matériau, plus coûteux que le deuxième matériau, étant utilisé uniquement pour la fabrication de la couronne dentée 6 qui réalise la fonction d'engrenage.

Dans un mode de fabrication de la roue dentée proposée, le remplissage complet de la cavité continue 7 par un matériau granulaire 10 est effectué après avoir fixé par soudure un disque 8 au moyeu 4 et à la couronne dentée 6. La cavité continue 7 est remplie du matériau granulaire 10, puis le second disque 8 est soudé pour finaliser la roue dentée 2.

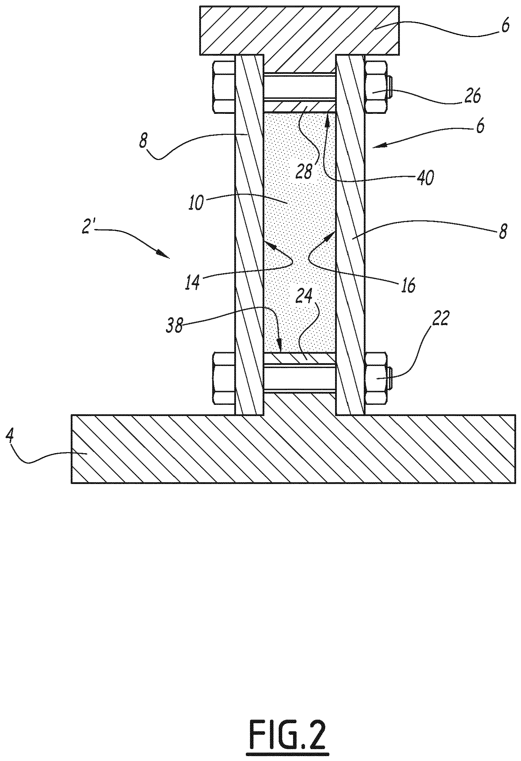

La figure 2 illustre schématiquement un deuxième mode de réalisation d'une roue dentée 2', adaptée à être incorporée dans un dispositif d'entraînement pour véhicule ferroviaire (non représenté).

La roue dentée 2' comporte un moyeu 4, une couronne dentée 6 et deux disques 8 (demi-disques en vue de profil dans la figure). Les disques 8 sont de forme et de taille identiques, et sont montés en vis-à-vis symétrique, et forment une jante 5 sur laquelle est fixée la couronne dentée 6.

Dans ce mode de réalisation les disques 8 sont vissés au moyeu 4 par l'intermédiaire de vis 22 vissées sur une collerette 24 forgée sur le moyeu.

La fixation de la couronne dentée 6 est réalisée au moyen de vis 26 sur une collerette 28.

Les disques 8, en relation avec la collerette 24 et la collerette 28, forment une cavité intérieure 7 continue, ou, en d'autres termes, qui ne comporte pas de paroi intérieure. La cavité intérieure 7 est comprise entre les parois 14, 16, 38 et 40 formées par les éléments de la roue qui sont les disques 8, la collerette 24 forgée sur le moyeu 4 et la collerette 28.

Comme dans le premier mode de réalisation de la figure 1, la cavité 7 est avantageusement remplie entièrement d'un matériau granulaire 10, de manière à ce que le matériau granulaire 10 soit en contact avec chacune des parois 14, 16, 38, 40 de la cavité intérieure.

Par exemple, le matériau 10 est un granulat, de préférence du sable.

De préférence, la couronne dentée 6 est réalisée en un premier matériau, qui présente des propriétés de dureté et de robustesse renforcées, et les disques 8 sont réalisés dans un deuxième matériau.

De préférence, le premier matériau est un alliage d'acier spécial, utilisé pour des engrenages, par exemple un alliage nickel, chrome, molybdène, par exemple 18NiCrMo7-6. En variante, le premier matériau est un autre alliage de la famille des alliages spéciaux résistants à l'abrasion.

De préférence, le deuxième matériau est de l'acier ordinaire.

Avantageusement, le coût global de fabrication d'une roue dentée 2' est réduit, le premier matériau, plus coûteux que le deuxième matériau, étant utilisé uniquement pour la fabrication de la couronne dentée 6 qui réalisé la fonction d'engrenage.

Dans un mode de fabrication de la roue dentée proposée dans la figure 2, le remplissage complet de la cavité continue 7 par un matériau granulaire 10 est effectué après avoir fixé par vissage un disque 8 au moyeu 4 et à la couronne dentée 6. La cavité continue 7 est remplie du matériau granulaire 8, puis le second disque 8 est vissé pour finaliser la roue 2'.

Selon une variante de fabrication, une partie de la roue dentée est forgée, cette partie comportant le moyeu 4, un premier disque 8 et la couronne dentée 6, formant une cavité continue 7. La cavité 7 est remplie de matériau granulaire 10 et ensuite, un deuxième disque 8 est vissé sur la partie forgée de la roue dentée.

Avantageusement, l'invention propose une roue dentée à jante amortie.

## Revendications

1. Roue dentée (2,2') adaptée à être fixée sur un essieu du véhicule, notamment ferroviaire, comportant deux disques identiques (8), montés en vis-à-vis symétrique, formant une jante (5) fixée sur un moyeu (4), et comportant une couronne dentée (6) fixée sur ladite jante, où les deux disques (8) en relation avec le moyeu (4) et la couronne dentée (6) forment une cavité continue (7), **caractérisée en ce que** ladite cavité continue (7) est remplie entièrement d'un matériau granulaire (10), et **en ce que** ladite couronne dentée (6) est en un premier matériau et les disques sont en un deuxième matériau différent du premier matériau.

2. Roue dentée selon la revendication 1, dans laquelle ledit matériau granulaire (10) est du sable.

3. Roue dentée selon la revendication 2, dans laquelle le premier matériau est un alliage d'acier spécial ayant des propriétés de robustesse renforcées, et le deuxième matériau est de l'acier ordinaire.

4. Roue dentée selon la revendication 3, dans laquelle le premier matériau est un alliage d'acier spécial comportant du nickel, du chrome et du molybdène.

5. Roue dentée selon l'une quelconque des revendications 1 à 4, dans laquelle la couronne dentée (6) est soudée ou vissée sur ladite jante (5).

6. Dispositif d'entrainement pour véhicule ferroviaire comportant un essieu et au moins une roue dentée (2, 2') fixée audit essieu, dans lequel ladite roue dentée (2, 2') est conforme aux revendications 1 à 5.

7. Dispositif d'entrainement selon la revendication 6, dans lequel le moyeu (4) de la roue dentée (6) est fixé par frettage à l'essieu, les disques (8) étant soudés sur le moyeu (4), et la couronne dentée (6) est soudée sur ladite jante (5).

8. Dispositif d'entraînement selon la revendication 6, dans lequel les disques (8) formant la jante de roue dentée sont fixés par vissage au moyeu.

9. Véhicule, notamment ferroviaire comportant un dispositif d'entraînement selon l'une des revendications 6 à 8.

## Patentansprüche

1. Zahnrad (2, 2'), das zur Befestigung an einer Achse des Fahrzeugs, insbesondere eines Schienenfahrzeugs, geeignet ist, aufweisend zwei identische Scheiben (8), die symmetrisch gegenüberliegend angebracht sind, die eine Felge (5) bilden, die an einer Nabe (4) befestigt ist, und einen Zahnkranz (6) umfassen, der an der Felge befestigt ist, wobei die beiden Scheiben (8) in Bezug auf die Nabe (4) und den Zahnkranz (6) einen durchgehenden Hohlraum (7) bilden, **dadurch gekennzeichnet, dass** der durchgehende Hohlraum (7) vollständig mit einem körnigen Material (10) gefüllt ist und dass der Zahnkranz (6) aus einem ersten Material besteht und die Scheiben aus einem zweiten Material bestehen, das sich von dem ersten Material unterscheidet.

2. Zahnrad nach Anspruch 1, wobei das körnige Material (10) Sand ist.

3. Zahnrad nach Anspruch 2, wobei das erste Material eine spezielle Stahllegierung mit verstärkten Festigkeitseigenschaften ist und das zweite Material gewöhnlicher Stahl ist.

4. Zahnrad nach Anspruch 3, wobei das erste Material eine spezielle Stahllegierung ist, die Nickel, Chrom und Molybdän aufweist.

5. Zahnrad nach einem der Ansprüche 1 bis 4, wobei der Zahnkranz (6) auf die Felge (5) geschweißt oder geschraubt ist.

6. Antriebsvorrichtung für ein Schienenfahrzeug mit einer Achse und mindestens einem Zahnrad (2, 2'), das an der Achse befestigt ist, wobei das Zahnrad (2, 2') den Ansprüchen 1 bis 5 entspricht.

7. Antriebsvorrichtung nach Anspruch 6, wobei die Nabe (4) des Zahnrads (6) durch Schrumpfung an der Achse befestigt ist, wobei die Scheiben (8) auf die Nabe (4) geschweißt sind und der Zahnkranz (6) auf die Felge (5) geschweißt ist.

8. Antriebsvorrichtung nach Anspruch 6, wobei die Scheiben (8), die den Zahnradkranz bilden, durch Schrauben an der Nabe befestigt sind.

9. Fahrzeug, insbesondere Schienenfahrzeug, das eine Antriebsvorrichtung nach einem der Ansprüche 6 bis 8 aufweist.

## Claims

1. Toothed wheel (2, 2') adapted to be fixed to a vehicle axle, in particular a railway axle, comprising two identical discs (8), mounted symmetrically opposite each other, forming a rim (5) fixed to a hub (4), and comprising a toothed rim (6) fixed to said rim, wherein the two discs (8) in relation to the hub (4) and the ring gear (6) form a continuous cavity (7), **characterised in that** said continuous cavity (7) is filled entirely with a granular material (10), and **in that** said ring gear (6) is made of a first material and the discs are made of a second material different from the first material.

2. Gear wheel as claimed in claim 1, wherein said granular material (10) is sand.

3. Gear wheel as claimed in claim 2, wherein the first material is a special steel alloy having enhanced strength properties, and the second material is ordinary steel.

4. Gear wheel as claimed in claim 3, wherein the first material is a special steel alloy comprising nickel, chromium and molybdenum.

5. Gear wheel according to any one of claims 1 to 4, in which the ring gear (6) is welded or screwed onto the said rim (5).

6. Drive device for a railway vehicle comprising an axle and at least one gear wheel (2, 2') attached to said axle, wherein said gear wheel (2, 2') is in accordance with claims 1 to 5.

7. Drive device as claimed in claim 6, in which the hub (4) of the gear wheel (6) is shrink-fitted to the axle, the discs (8) being welded to the hub (4), and the gear wheel (6) is welded to said rim (5).

8. Drive device as claimed in claim 6, in which the discs (8) forming the sprocket rim are screwed to the hub.

9. Vehicle, particularly a railway vehicle, comprising at least one drive device according to any of claims 6 to 8.
